# EUROPÄISCHE PATENTSCHRIFT

(11) **EP 3 491 858 B1**
(45) Veröffentlichungstag und Bekanntmachung des Hinweises auf die Patenterteilung: **27.10.2021**
(21) Anmeldenummer: 17743354.7
(22) Anmeldetag: 28.07.2017
(51) Int. Cl.: H04W 8/18, H04W 8/20

(54) **PROFILSERVER ZUM BEREITSTELLEN VON ELEKTRONISCHEN KOMMUNIKATIONSPROFILEN VON ELEKTRONISCHEN TEILNEHMERIDENTITÄTSMODULEN MOBILER KOMMUNIKATIONSGERÄTE**
PROFILE SERVER FOR PROVIDING ELECTRONIC COMMUNICATION PROFILES OF ELECTRONIC SUBSCRIBER IDENTITY MODULES OF MOBILE COMMUNICATION DEVICES
SERVEUR DE PROFIL PERMETTANT DE FOURNIR DES PROFILS DE COMMUNICATION ÉLECTRONIQUES POUR DES MODULES D'IDENTITÉ D'ABONNÉ ÉLECTRONIQUES (ESIMS) D'APPAREILS DE COMMUNICATION MOBILES

(30) Priorität: 29.07.2016 EP 16181912
(43) Veröffentlichungstag der Anmeldung: 05.06.2019
(73) Patentinhaber: Deutsche Telekom AG, 53113 Bonn (DE)
(72) Erfinder: KALINER, Stefan, 53639 Königswinter (DE)
(74) Vertreter: Raible Deissler Lehmann Patentanwälte PartG mbB
(86) Internationale Anmeldenummer: PCT/EP2017/069118
(87) Internationale Veröffentlichungsnummer: WO 2018/019980

(56) Entgegenhaltungen:
- EP-A1- 1 331 833
- US-A1- 2011 087 757
- US-A1- 2016 165 433

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdrahtete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise eine zulässige Datenrate, des mit einem eSIM ausgestatteten mobilen Kommunikationsgerätes.

Im Auslieferungszustand sind die eSIMs in der Regel mit einem Bootstrapprofil versehen, welches eine initiale Konnektivität in das Kommunikationsnetzwerk ermöglicht und welches die Netzwerkadresse eines Discovery-Servers enthält. Der Discovery-Server ist vorgeschaltet und enthält die Angaben über Profilserver wie beispielsweise SMDP+ Server, welche die Kommunikationsprofile für die eSIMs verwalten.

Bei erstem Einbuchen in das Kommunikationsnetz übermittelt die eSIM die elektronische Identifikation (eID) eines eSIMs an den Discovery-Server. Dieser kann auf dieser Basis den Profilserver (z.B. SMDP+ Server) dem eSIM zuordnen und die Netzwerkadresse des Profilservers an das eSIM übertragen.

Mit steigender Anzahl Internet-fähiger mobiler Kommunikationsgeräte besteht die Aufgabe, ein effizienteres Konzept zum Bereitstellen von Kommunikationsprofilen für elektronische Teilnehmeridentifikationsmodule zu schaffen.

US 2011/0087757 A1 beschreibt ein Verfahren und eine Vorrichtung zum Konfigurieren einer Anwendung an einem Gerät in einem Kommunikationsnetzwerk. Ein Server empfängt eine Anforderungsnachricht vom Gerät. Die Anforderungsnachricht enthält Informationen, die die Anwendung identifizieren, und weitere Informationen, die sich auf den Gerätetyp oder einen mit dem Gerät verbundenen Netzwerkbetreiber oder beide beziehen. Die weiteren Informationen werden vom Server verwendet, um spezifische Konfigurationsinformationen bezüglich der Anwendung zu erhalten. Eine Antwort wird an das Gerät gesendet, wobei die Antwort die erhaltene spezifische Konfiguration enthält. Die spezifischen Konfigurationsinformationen werden anschließend vom Gerät zur Konfiguration der Anwendung verwendet.

EP 1 331 833 A1 beschreibt ein System mit Beschaffungsmitteln für eine IMEI, assoziiert mit einer MSISDN, aus dem Mobiltelefonnetz, Speichermitteln für das erhaltene MSISDN-IMEI-Paar und einer Zugangsberechtigungsschnittstelle zu dem MSISDN-IMEI-Paar von einer externen Anwendung oder vom Netzwerk selbst, um von der IMEI die Merkmale jedes Endgeräts zu erhalten, das seiner MSISDN zugeordnet ist, und um so die verschiedenen Dienste bereitstellen zu können, die an die MSISDN angepasst sind.

Die vorliegende Erfindung basiert auf der Erkenntnis, dass die obige Aufgabe durch gerätespezifische Kommunikationsprofile gelöst werden kann. Die gerätespezifischen Kommunikationsprofile sind unterschiedlichen Geräteklassen von mobilen Kommunikationsgeräten zugeordnet, sodass eine Auswahl eines Kommunikationsprofils für ein elektronisches Teilnehmeridentifikationsmodul gerätespezifisch durchgeführt werden kann.

Gemäß einem ersten Aspekt betrifft die Erfindung einen Profilserver zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit einer Kommunikationsschnittstelle, welche ausgebildet ist, eine elektronische Identifikation eines elektronischen Teilnehmeridentitätsmoduls eines mobilen Kommunikationsgeräts zu empfangen, einem Speicher, welcher ausgebildet ist, gerätespezifische elektronische Kommunikationsprofile für unterschiedliche Geräteklassen von mobilen Kommunikationsgeräten zu speichern, einem Prozessor, welcher ausgebildet ist, auf der Basis der empfangenen elektronischen Identifikation eine Geräteklasse des mobilen Kommunikationsgeräts zu bestimmen, wobei der Prozessor ausgebildet ist, ein gerätespezifisches elektronisches Kommunikationsprofil aus dem Speicher auszulesen, das der bestimmten Geräteklasse des mobilen Kommunikationsgerätes zugeordnet ist, wobei die Kommunikationsschnittstelle ausgebildet ist, das ausgelesene elektronische Kommunikationsprofil an das mobile Kommunikationsgerät auszusenden.

In einer Ausführungsform ist der Prozessor ausgebildet, die Geräteklasse anhand der elektronischen Identifikation zu bestimmen.

In einer Ausführungsform ist der Prozessor ausgebildet, zur Bestimmung der Geräteklasse die Kommunikationsschnittstelle anzuweisen, die empfangene elektronische Identifikation über das Kommunikationsnetzwerk an einen Datenserver, in welchem die Geräteklassen elektronischen Identifikationen zugeordnet sind, auszusenden, wobei die Kommunikationsschnittstelle ausgebildet ist, von dem Datenserver die Geräteklasse zu empfangen.

In einer Ausführungsform spezifizieren die gerätespezifischen elektronischen Kommunikationsprofile und/oder die Geräteklassen gerätespezifische Kommunikationsfähigkeiten oder Kommunikationsanforderungen, insbesondere Datenraten oder Bitfehlerraten oder Verzögerungen oder Verbindungshäufigkeiten.

In einer Ausführungsform sind die Geräteklassen durch einen numerischen Indikator bezeichnet.

In einer Ausführungsform ist in dem Speicher pro Geräteklasse genau ein gerätespezifisches elektronisches Kommunikationsprofil abgelegt.

In einer Ausführungsform ist der Prozessor ausgebildet, das ausgewählte Kommunikationsprofil benutzerspezifisch zu konfigurieren, insbesondere die Datenrate oder die Verzögerung an Kommunikationsanforderungen oder Vertragsbestimmungen eines Benutzers des mobilen Kommunikationsgerätes anzupassen.

In einer Ausführungsform ist die Kommunikationsschnittstelle eine drahtlose Kommunikationsschnittstelle, insbesondere eine LTE- oder eine UMTS-Kommunikationsschnittstelle.

Ferner vorgesehen ist ein Datenserver zum Bereitstellen von gerätespezifischen elektronischen Kommunikationsprofilen, mit einem Speicher, in welchem eine Mehrzahl von elektronischen Identifikationen von elektronischen Teilnehmeridentitätsmodulen von mobilen Kommunikationsgeräten gespeichert sind, wobei die elektronischen Identifikationen unterschiedlichen Geräteklassen der mobilen Kommunikationsgeräte zugeordnet sind, einer Kommunikationsschnittstelle, welche ausgebildet ist, eine elektronische Identifikation von einem Profilserver zu empfangen, wobei die Kommunikationsschnittstelle ausgebildet ist, eine Geräteklasse, welche der empfangenen elektronischen Identifikation zugeordnet ist, an den Profilsender auszusenden.

Der Datenserver kann einen Prozessor aufweisen, welche ausgebildet ist, die Geräteklasse, welche der empfangenen elektronischen Identifikation zugeordnet ist, aus dem Speicher auszulesen.

In einer Ausführungsform sind in dem Speicher die elektronischen Identifikationen unterschiedlichen Geräteklassen der mobilen Kommunikationsgeräte desselben Herstellers oder unterschiedlicher Hersteller von mobilen Kommunikationsgeräten zugeordnet.

Ferner vorgesehen ist ein Subnetzwerk eines Kommunikationsnetzwerkes mit einer Mehrzahl von Subnetzwerken, wobei das Subnetzwerk für die Bereitstellung von Geräteklassen, welche unterschiedlichen mobilen Kommunikationsgeräten zugeordnet sind, vorgesehen ist, mit dem Datenserver, wobei der Datenserver ausschließlich über das Subnetzwerk adressierbar ist.

In einer Ausführungsform ist das Subnetzwerk ein Punkt-zu-Punkt-Subnetzwerk, insbesondere ein Slice eines 5G-Kommunikationsnetzwerks.

Gemäß einem zweiten Aspekt betrifft die Erfindung ein Verfahren zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit: Empfangen einer elektronischen Identifikation eines elektronischen Teilnehmeridentitätsmoduls eines mobilen Kommunikationsgeräts, Bestimmen einer Geräteklasse des mobilen Kommunikationsgeräts auf der Basis der empfangenen elektronischen Identifikation, Auslesen eines gerätespezifischen elektronischen Kommunikationsprofils aus einem Speicher, das der bestimmten Geräteklasse des mobilen Kommunikationsgerätes zugeordnet ist, und Aussenden des ausgelesenen elektronischen Kommunikationsprofils an das mobile Kommunikationsgerät.

Weitere Ausführungsformen der Erfindung werden Bezug nehmend auf die beiliegenden Figuren näher erläutert. Es zeigen:
- Fig. 1: einen Profilserver gemäß einer Ausführungsform; und
- Fig. 2: ein Subnetzwerk mit einem Datenserver gemäß einer Ausführungsform.

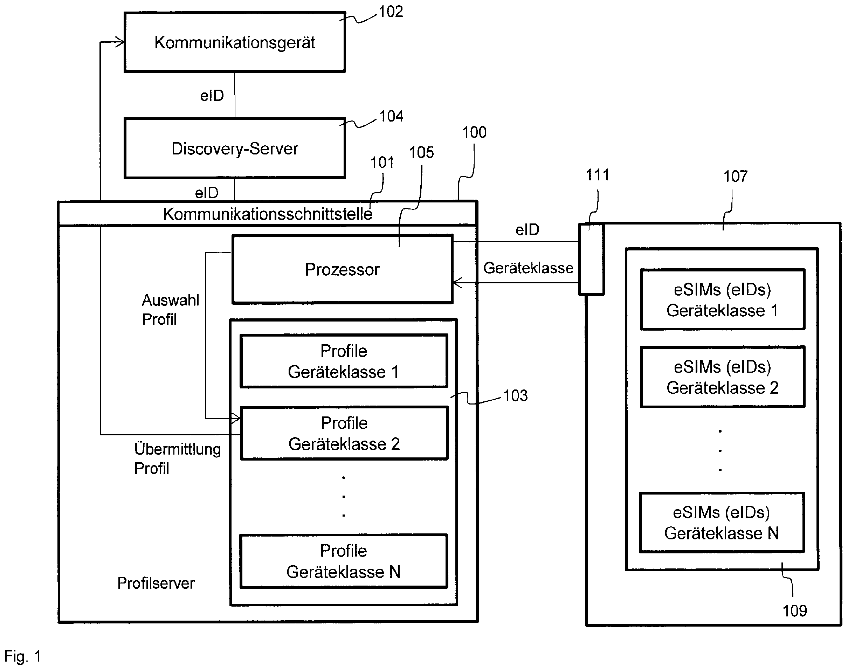

Fig. 1 zeigt einen Profilserver 100 zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit einer Kommunikationsschnittstelle 101, welche ausgebildet ist, eine elektronische Identifikation eines elektronischen Teilnehmeridentitätsmoduls eines mobilen Kommunikationsgeräts 102 zu empfangen, einem Speicher 103, welcher ausgebildet ist, gerätespezifische elektronische Kommunikationsprofile für unterschiedliche Geräteklassen von mobilen Kommunikationsgeräten zu speichern, einem Prozessor 105, welcher ausgebildet ist, auf der Basis der empfangenen elektronischen Identifikation eine Geräteklasse des mobilen Kommunikationsgeräts zu bestimmen, wobei der Prozessor ausgebildet ist, ein gerätespezifisches elektronisches Kommunikationsprofil aus dem Speicher auszulesen, das der bestimmten Geräteklasse des mobilen Kommunikationsgerätes zugeordnet ist, wobei die Kommunikationsschnittstelle 101 ausgebildet ist, das ausgelesene elektronische Kommunikationsprofil an das mobile Kommunikationsgerät auszusenden.

In dem in Fig. 1 dargestellten Szenario ist ferner ein Discovery-Server 104 vorgesehen, um dem Kommunikationsgerät 102 die URI des Profilservers 100 zu übermitteln, ansprechend auf eine Bootstrapping-Anfrage.

In Fig. 1 ist ferner ein optionaler Datenserver 107 dargestellt. Der Datenserver 107 ist zum Bereitstellen von gerätespezifischen elektronischen Kommunikationsprofilen vorgesehen und umfasst einen Speicher 109, in welchem einer Mehrzahl von elektronischen Identifikationen von elektronischen Teilnehmeridentitätsmodulen von mobilen Kommunikationsgeräten gespeichert sind, wobei die elektronischen Identifikationen unterschiedlichen Geräteklassen der mobilen Kommunikationsgeräte zugeordnet sind, sowie eine Kommunikationsschnittstelle 111, welche ausgebildet ist, eine elektronische Identifikation von einem Profilserver zu empfangen, wobei die Kommunikationsschnittstelle 111 ausgebildet ist, eine Geräteklasse, welche der empfangenen elektronischen Identifikation zugeordnet ist, an den Profilserver 102 auszusenden.

In dem in Fig. 1 dargestellten Ausführungsbeispiel ist der Prozessor 105 ausgebildet, zur Bestimmung der Geräteklasse die Kommunikationsschnittstelle 101 anzuweisen, die empfangene elektronische Identifikation über das Kommunikationsnetzwerk an einen Datenserver 107, in welchem die Geräteklassen elektronischen Identifikationen zugeordnet sind, auszusenden, wobei die Kommunikationsschnittstelle 101 ausgebildet ist, von dem Datenserver 107 die Geräteklasse zu empfangen.

In einer Ausführungsform kann auf die Kommunikation mit dem Datenserver 107 verzichtet werden, indem der Profilserver 100 die Bestimmung der Geräteklassen beispielsweise auf der Basis der elektronischen Identifikation selbst vornimmt.

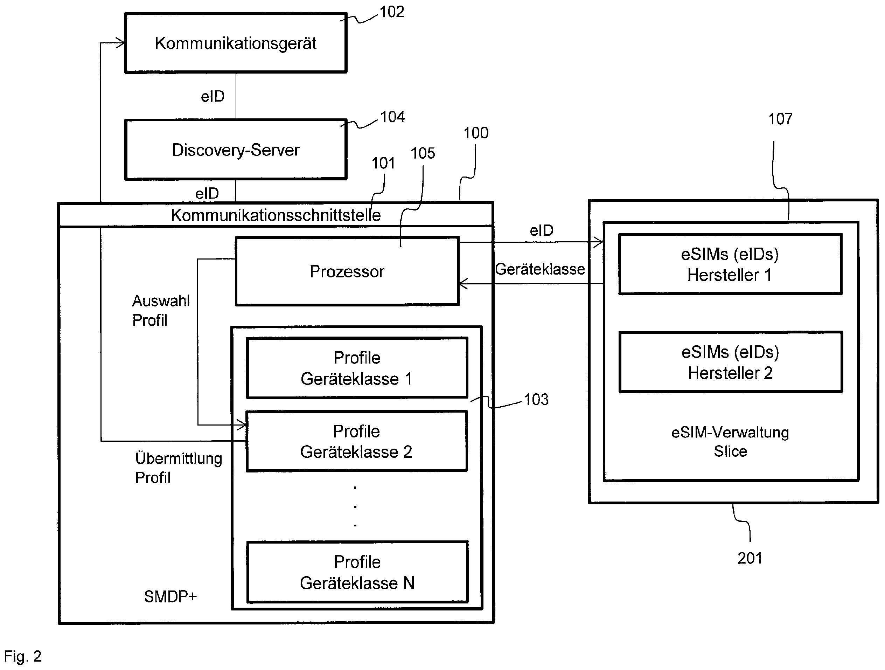

Fig. 2 zeigt ein Subnetzwerk 201 mit einem Datenserver 107 gemäß einer Ausführungsform. Die Bereitstellung von gerätespezifischen Kommunikationsmodulen für eSIMs kann durch das spezifische Punkt-zu-Punkt Subnetzwerk 201, beispielsweise ein Slice eines 5G-Kommunikationsnetzwerks, implementiert werden.

Das Subnetzwerk 201 umfasst den Datenserver 107, wobei der Datenserver 107 ausschließlich über das Subnetzwerk 201 adressierbar ist. Hierzu kann das Subnetzwerk 201 eine Subnetzwerk-Adresse aufweisen, welche dem Profilserver 100 bekannt ist. Auf diese Weise können gerätespezifische Kommunikationsprofile besonders effizient bereitgestellt werden.

Damit die gerätespezifischen Kommunikationsprofile den mobilen Kommunikationsgeräten zugeordnet werden können, werden die eSIMs gerätespezifisch verwaltet. Hierzu können in einer Ausführungsform die eSIMs gerätespezifisch gekennzeichnet werden. Diese gerätespezifische Kennzeichnung kann entweder Teil der eID sein (elD enthält einen Geräteklassen-Identifier), oder die eSIMs sind den Geräteklassen zugeordnet, sodass der Profilserver nicht auf den Datenserver 107 zugreifen muss. Diese Zuordnung kann jedoch in einer Hersteller-Datenbank implementiert werden, welche durch den Datenserver 107 realisiert ist. In einer Ausführungsform ist der Profilserver 100 ein SMDP+ Server.

Das Kommunikationsgerät 102 mit beispielsweise der Geräteklasse 2 verbindet sich mittels eines Bootstrapprofils zum Discovery Server 104, welcher die eID an den Profilserver 100 weiter leitet. Der Profilserver 100 bevorratet eine Anzahl gerätespezifischer Kommunikationsprofile.

Um dem Kommunikationsgerät 102 das entsprechende Kommunikationsprofil zuordnen zu können, initiiert der Profilserver 100 in einer Ausführungsform eine Anfrage nach der Geräteklasse an den Datenserver 107. Daraufhin wird dem Profilserver 100 die Geräteklasse 2 des Kommunikationsgerätes von dem Datenserver 107übermittelt. Mit der Geräteklasse kann der Profilserver das gerätespezifische Kommunikationsprofil für das Kommunikationsgerät auswählen.

## Patentansprüche

1. Profilserver (100) zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (elD) zugeordnet ist, wobei die mobilen Kommunikationsgeräte unterschiedlichen Geräteklassen zugeordnet sind, mit:
einer Kommunikationsschnittstelle (101), welche ausgebildet ist, eine elektronische Identifikation zu empfangen;
einem Speicher (103), welcher ausgebildet ist, gerätespezifische elektronische Kommunikationsprofile für unterschiedliche Geräteklassen von mobilen Kommunikationsgeräten zu speichern;
einem Prozessor (105), welcher ausgebildet ist, auf der Basis der empfangenen elektronischen Identifikation eine Geräteklasse des mobilen Kommunikationsgeräts zu bestimmen, wobei der Prozessor ausgebildet ist, ein gerätespezifisches elektronisches Kommunikationsprofil aus dem Speicher auszulesen, das der bestimmten Geräteklasse des mobilen Kommunikationsgeräts zugeordnet ist; wobei
die Kommunikationsschnittstelle (101) ausgebildet ist, das ausgelesene elektronische Kommunikationsprofil an das mobile Kommunikationsgerät auszusenden,
**dadurch gekennzeichnet, dass**
die elektronische Identifikation eine elektronische Identifikation eines elektronischen Teilnehmeridentitätsmoduls eines mobilen Kommunikationsgeräts ist,
der Prozessor (105) ausgebildet ist, zur Bestimmung der Geräteklasse die Kommunikationsschnittstelle (101) anzuweisen, die empfangene elektronische Identifikation über ein Kommunikationsnetzwerk an einen Datenserver (107), in welchem die Geräteklassen elektronischen Identifikationen zugeordnet sind, auszusenden, und wobei die Kommunikationsschnittstelle (101) ausgebildet ist, von dem Datenserver (107) die Geräteklasse zu empfangen, und
der Prozessor (105) ausgebildet ist, das ausgewählte Kommunikationsprofil benutzerspezifisch zu konfigurieren, insbesondere die Datenrate oder die Verzögerung an Kommunikationsanforderungen oder Vertragsbestimmungen eines Benutzers des mobilen Kommunikationsgeräts anzupassen.

2. Profilserver (100) nach Anspruch 1, wobei die gerätespezifischen elektronischen Kommunikationsprofile und/oder die Geräteklassen gerätespezifische Kommunikationsfähigkeiten oder Kommunikationsanforderungen, insbesondere Datenraten oder Bitfehlerraten oder Verzögerungen oder Verbindungshäufigkeiten, spezifizieren.

3. Profilserver (100) nach einem der vorstehenden Ansprüche, wobei die Geräteklassen durch einen numerischen Indikator bezeichnet sind.

4. Profilserver (100) nach einem der vorstehenden Ansprüche, wobei in dem Speicher (103) pro Geräteklasse genau ein gerätespezifisches elektronisches Kommunikationsprofil abgelegt ist.

5. Profilserver (100) nach einem der vorstehenden Ansprüche, wobei die Kommunikationsschnittstelle (101) eine drahtlose Kommunikationsschnittstelle, insbesondere eine LTE- oder eine UMTS-Kommunikationsschnittstelle ist.

6. Verfahren für einen Profilserver (100) zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit:
Empfangen einer elektronischen Identifikation;
Bestimmen einer Geräteklasse des mobilen Kommunikationsgeräts auf der Basis der empfangenen elektronischen Identifikation;
Auslesen eines gerätespezifischen elektronischen Kommunikationsprofils aus einem Speicher, das der bestimmten Geräteklasse des mobilen Kommunikationsgeräts zugeordnet ist;
**dadurch gekennzeichnet, dass**
die elektronische Identifikation eine elektronische Identifikation eines elektronischen Teilnehmeridentitätsmoduls eines mobilen Kommunikationsgeräts ist, und
beim Bestimmen der Geräteklasse die empfangene elektronische Identifikation über ein Kommunikationsnetz an einen Datenserver, in welchem die Geräteklassen elektronischen Identifikationen zugeordnet sind, ausgesendet und die Geräteklasse von dem Datenserver empfangen wird, und
das Verfahren ferner die Schritte umfasst:
Benutzerspezifisches Konfigurieren des ausgelesenen Kommunikationsprofils, insbesondere Anpassen der Datenrate und der Verzögerung an Kommunikationsanforderungen oder Vertragsbestimmungen eines Benutzers des mobilen Kommunikationsgeräts;
Aussenden des ausgelesenen und benutzerspezifisch konfigurierten elektronischen Kommunikationsprofils an das mobile Kommunikationsgerät.

## Claims

1. A profile server (100) for providing electronic communication profiles of electronic subscriber identity modules of mobile communication devices, wherein each electronic subscriber identity module is assigned an electronic identification (elD), wherein the mobile communication devices are assigned to different device classes, with:
a communication interface (101) designed to receive an electronic identification;
a memory (103) designed to store device-specific electronic communication profiles for different device classes of mobile communication devices;
a processor (105) designed to determine a device class of the mobile communication device based on the received electronic identification, the processor being designed to read from the memory a device-specific electronic communication profile assigned to the determined device class of the mobile communication device; wherein
the communication interface (101) is designed to transmit the read electronic communication profile to the mobile communication device,
**characterized in that**
the electronic identification is an electronic identification of an electronic subscriber identity module of a mobile communication device,
the processor (105) is designed, for determining the device class, to instruct the communication interface (101) to transmit the received electronic identification via a communication network to a data server (107) in which the device classes are assigned to electronic identifications, and
wherein the communication interface (101) is designed to receive from the data server (107)
the device class, and
the processor (105) is designed to configure the selected communication profile in a user-specific manner, in particular to adapt the data rate or the delay to communication requirements or contract provisions of a user of the mobile communication device.

2. The profile server (100) according to claim 1,
wherein the device-specific electronic communication profiles and/or the device classes
specify device-specific communication capabilities or communication requirements, in particular data rates or bit error rates or delays or connection frequencies.

3. The profile server (100) according to any of the preceding claims, wherein the device classes are designated by a numerical indicator.

4. The profile server (100) according to any of the preceding claims, wherein exactly one device-specific electronic communication profile per device class is stored in the memory (103).

5. The profile server (100) according to any of the preceding claims, wherein the communication interface (101) is a wireless communication interface, in particular an LTE or UMTS communication interface.

6. A method for a profile server (100) for providing electronic communication profiles of electronic subscriber identity modules of mobile communication devices, wherein each electronic subscriber identity module is assigned an electronic identification (elD), wherein the mobile communication devices are assigned to different device classes, with:
receiving an electronic identification;
determining a device class of the mobile communication device based on the received electronic identification;
reading from a memory a device-specific electronic communication profile assigned to the specific device class of the mobile communication device;
**characterized in that**
the electronic identification is an electronic identification of an electronic subscriber identity module of a mobile communication device, and
when determining the device class, the received electronic identification is transmitted via a communication network to a data server in which the device classes are assigned to electronic identifications, and the device class is received by the data server, and
the method further comprises the steps of:
configuring the read communication profile in a user-specific manner, in particular adapting the data rate and delay to communication requirements or contract provisions of a user of the mobile communication device;
transmitting to the mobile communication device the electronic communication profile read and configured in a user-specific manner.

## Revendications

1. Serveur de profil (100) permettant de fournir des profils de communication électroniques pour des modules d'identité d'abonné électroniques d'appareils de communication mobiles, une identification électronique (eID) étant associée à chaque module d'identité d'abonné électronique, les appareils de communication mobiles étant associés aux différentes classes d'appareils, ledit serveur de profil comportant :
une interface de communication (101) conçue pour recevoir une identification électronique ;
une mémoire (103) conçue pour stocker des profils de communication électroniques spécifiques à un appareil pour différentes classes d'appareils de communication mobiles ;
un processeur (105) conçu pour déterminer une classe d'appareil de communication mobile sur la base de l'identification électronique reçue, le processeur étant conçu pour lire dans la mémoire un profil de communication électronique spécifique à un appareil, qui est associé à la classe d'appareil déterminée de l'appareil de communication mobile ;
l'interface de communication (101) étant conçue pour envoyer le profil de communication électronique lu à l'appareil de communication mobile,
**caractérisé en ce que**
l'identification électronique est une identification électronique d'un module d'identité d'abonné électronique d'un appareil de communication mobile,
le processeur (105) étant conçu de manière à instruire l'interface de communication (101), dans le but de déterminer la classe d'appareil, d'envoyer l'identification électronique reçue, par le biais d'un réseau de communication, à un serveur de données (107) sur lequel les classes d'appareils sont associées à des identifications électroniques, et
l'interface de communication (101) étant conçue pour recevoir la classe d'appareil du serveur de données (107)
et
le processeur (105) étant conçu pour configurer le profil de communication sélectionné de façon spécifique pour un utilisateur, en particulier pour ajuster le débit de données ou la temporisation à des exigences de communication ou à des dispositions contractuelles d'un utilisateur de l'appareil de communication mobile.

2. Serveur de profil (100) selon la revendication 1,
les profils de communication électroniques spécifiques à un appareil et/ou les classes d'appareils spécifiant des capacités de communication ou des exigences de communication spécifiques à un appareil, en particulier des débits de données ou des taux d'erreurs sur les éléments binaires ou des temporisations ou des fréquences de connexion.

3. Serveur de profil (100) selon l'une des revendications précédentes, les classes d'appareils étant désignées par un indicateur numérique.

4. Serveur de profil (100) selon l'une des revendications précédentes, un seul profil de communication électronique spécifique à un appareil étant déposé dans la mémoire (103) pour chaque classe d'appareil.

5. Serveur de profil (100) selon l'une des revendications précédentes, l'interface de communication (101) étant une interface de communication sans fil, en particulier une interface de communication LTE ou UMTS.

6. Procédé destiné à un serveur de profil (100) permettant de fournir des profils de communication électroniques de modules d'identité d'abonné électroniques d'appareils de communication mobiles, une identification électronique (eID) étant associée à chaque module d'identité d'abonné électronique, les appareils de communication mobiles étant associés aux différentes classes d'appareils, ledit procédé comportant les étapes suivantes :
la réception d'une identification électronique ;
la détermination d'une classe d'appareil pour l'appareil de communication mobile sur la base de l'identification électronique reçue ;
la lecture d'un profil de communication électronique spécifique à un appareil dans une mémoire, ledit profil étant associé à la classe d'appareil déterminée de l'appareil de communication mobile ;
**caractérisé en ce que**
l'identification électronique est une identification électronique d'un module d'identité d'abonné électronique d'un appareil de communication mobile, et
lors de la détermination de la classe d'appareil, l'identification électronique reçue est envoyée par le biais du réseau de communication à un serveur de données, sur lequel les classes d'appareils sont associées à des identifications électroniques, et la classe d'appareil est reçue par le serveur de données, et
le procédé comprenant en outre les étapes suivantes :
la configuration personnalisée du profil de communication lu, en particulier l'ajustement du débit de données et de la temporisation à des exigences de communication ou à des dispositions contractuelles d'un utilisateur de l'appareil de communication mobile ;
l'envoi du profil de communication électronique configuré de façon spécifique pour un utilisateur à l'appareil de communication mobile.
